# EUROPEAN PATENT APPLICATION

(11) **EP 3 777 764 A1**
(43) Date of publication of application: **17.02.2021**
(21) Application number: 19784503.5
(22) Date of filing: 26.03.2019
(51) Int. Cl.: A61C 17/16, A61C 17/22

(54) **ARTIFICIAL-INTELLIGENCE-BASED TOOTHBRUSHING RECOMMENDATION METHOD, APPARATUS AND DEVICE, AND STORAGE MEDIUM**

(30) Priority: 13.04.2018 CN 201810332171
(71) Applicant: Shenzhen Lebond Technology Co., Ltd., Shenzhen, Guangdong 518000 (CN)
(72) Inventor: HUANG, Bazi, Shenzhen, Guangdong 518000 (CN); HUANG, Daochen, Shenzhen, Guangdong 518000 (CN)
(74) Representative: de Arpe Fernandez, Manuel
(86) International application number: PCT/CN2019/079759
(87) International publication number: WO 2019/196646

(57) **Abstract**

Disclosed are an artificial-intelligence-based toothbrushing recommendation method, apparatus and device, and a storage medium. The toothbrushing recommendation method comprises: acquiring toothbrushing data and brush head data detected by a data detection apparatus in an intelligent toothbrush; analyzing the toothbrushing data, and compiling statistics to obtain a toothbrushing condition of each toothbrushing surface, wherein the toothbrushing condition comprises a toothbrushing duration, a toothbrushing strength, a toothbrushing amplitude and a horizontal brushing condition; analyzing the brush head data to obtain a brush head condition of the intelligent toothbrush; and forming a recommended first toothbrushing scheme according to the toothbrushing duration, the toothbrushing strength, the toothbrushing amplitude, the horizontal brushing condition and the brush head condition. By analyzing toothbrushing data and brush head data acquired in a toothbrushing process of a user, a toothbrushing scheme suitable for the user is formed and is recommended to the user so as to achieve the dynamic adjustment of the toothbrushing scheme in an intelligent toothbrush, thereby satisfying the toothbrushing demands of different users and improving the applicability of the intelligent toothbrush.

## Description

### TECHNICAL FIELD

The present disclosure relates to the technical field of smart toothbrushes, and in particular, to an artificial-intelligence-based toothbrushing recommendation method, a recommendation apparatus, a recommendation device, and a storage medium.

### BACKGROUND

Toothbrushing is an important way to use a toothbrush to remove plaque, soft dirt, and food residue so as to keep the mouth clean and prevent periodontal disease. However, in processes of toothbrushing with traditional toothbrushes, people often fail to see toothbrushing situations and cannot obtain accurate toothbrushing data, so that they cannot correctly determine standardization of their toothbrushing actions, resulting in insufficient oral teeth cleanliness, and causing occurrence of many oral diseases.

With the progress of society, people pay more and more attention to physical health, and smart toothbrushes with stronger cleaning effect have been developed rapidly. However, existing smart toothbrushes usually can only achieve automatic toothbrushing according to preset brushing modes, and a preset brushing mode in an existing smart toothbrush is relatively single, while different users have different tooth conditions. The relatively single toothbrushing mode cannot meet toothbrushing requirements of different users, resulting in poor applicability of smart toothbrushing.

In summary, how to meet the toothbrushing requirements of different users and improve the applicability of smart toothbrushes has become an urgent problem for those skilled in the art.

### SUMMARY OF THE DISCLOSURE

Embodiments of the present disclosure provides an artificial-intelligence-based toothbrushing recommendation method, a recommendation apparatus, a recommendation device, and a storage medium, which can recommend corresponding toothbrushing schemes to users according to user's toothbrushing data and brush head data of smart toothbrushes, so as to dynamically adjust toothbrushing schemes in smart toothbrushes, thereby meeting toothbrushing requirements of different users and improving applicability of smart toothbrushes.

A first aspect of an embodiment of the present disclosure provides an artificial-intelligence-based toothbrushing recommendation method, comprising: acquiring toothbrushing data and brush head data detected by a data detection apparatus in a smart toothbrush; analyzing the toothbrushing data, and obtaining a toothbrushing condition of each toothbrushing surface by statistics, wherein the toothbrushing condition comprises a toothbrushing duration, a toothbrushing strength, a toothbrushing amplitude and a horizontal brushing condition; analyzing the brush head data to obtain a brush head condition of the smart toothbrush; and forming a recommended first toothbrushing scheme according to the toothbrushing duration, the toothbrushing strength, the toothbrushing amplitude, the horizontal brushing condition, and the brush head condition.

Further, the data detection apparatus comprises a gesture sensor, a pressure sensor, an NFC label, and a label read-write apparatus. Correspondingly, the acquiring toothbrushing data and brush head data detected by a data detection apparatus in a smart toothbrush comprises: acquiring first toothbrushing data output by the gesture sensor, second toothbrushing data output by the pressure sensor, and brush head data collected by the NFC label and read by the label read-write apparatus.

Optionally, the toothbrushing recommendation method further comprises: acquiring personal information of a user, and determining a person group in which the user is according to the personal information; according to the person group in which the user is and a correspondence relationship between the person group and a preset toothbrushing scheme, recommending a matched original toothbrushing scheme; receiving a first selection operation of the user for the original toothbrushing scheme, and determining whether the original toothbrushing scheme is accepted according to the first selection operation; when the original toothbrushing scheme is accepted, pushing the original toothbrushing scheme to the smart toothbrush to perform adjustment of toothbrushing parameters; and when the original toothbrushing scheme is not accepted, pushing a second toothbrushing scheme re-selected or self-defined by the user to the smart toothbrush to perform adjustment of toothbrushing parameters.

Preferably, the toothbrushing data comprises a three-axis acceleration output by a three-axis acceleration sensor and a three-axis angular velocity output by a three-axis gyroscope. Correspondingly, the analyzing the toothbrushing data comprises: performing fusion processing for the three-axis acceleration and the three-axis angular velocity, and obtaining a rolling angle, a pitch angle, and a yawing angle of the smart toothbrush at each toothbrushing position; according to the rolling angle, the pitch angle, and the yawing angle, determining a teeth division corresponding to each toothbrushing position in preset teeth divisions, wherein the preset teeth divisions refer to teeth regions divided in advance according to distribution conditions of all teeth; and determining a toothbrushing surface corresponding to each toothbrushing position in the teeth divisions according to the rolling angle.

Further, obtaining a toothbrushing duration of each toothbrushing surface by statistics comprises: counting a total toothbrushing duration during which the smart toothbrush performs toothbrushing actions on each toothbrushing surface; acquiring a mistaken toothbrushing duration during which the toothbrushing actions are performed on each toothbrushing surface and the pitch angle of the smart toothbrush is larger than a preset pitch angle; and subtracting the mistaken toothbrushing duration from the total toothbrushing duration to obtain a toothbrushing duration of each toothbrushing surface.

Optionally, forming a recommended first toothbrushing scheme according to the toothbrushing duration, the toothbrushing strength, the toothbrushing amplitude, the horizontal brushing condition, and the brush head condition specifically comprises: determining a teeth condition of each toothbrushing surface according to the toothbrushing duration, the toothbrushing strength, the toothbrushing amplitude, the horizontal brushing condition; and forming the recommended first toothbrushing scheme according to the teeth condition of each toothbrushing surface and the brush head condition.

Preferably, after forming a recommended first toothbrushing scheme according to the toothbrushing duration, the toothbrushing strength, the toothbrushing amplitude, the horizontal brushing condition, and the brush head condition, the toothbrushing recommendation method further comprises: receiving a second selection operation of the user for the first toothbrushing scheme, and determining whether the first toothbrushing scheme is accepted according to the second selection operation; and when the first toothbrushing scheme is accepted, pushing the first toothbrushing scheme to the smart toothbrush to perform adjustment of toothbrushing parameters.

A second aspect of embodiments of the present disclosure provides an artificial-intelligence-based toothbrushing recommendation apparatus, comprising: a data acquisition module configured to acquire toothbrushing data and brush head data detected by a data detection apparatus in a smart toothbrush; a toothbrushing data analysis module configured to analyze the toothbrushing data, and obtain a toothbrushing condition of each toothbrushing surface by statistics, wherein the toothbrushing condition comprises a toothbrushing duration, a toothbrushing strength, a toothbrushing amplitude and a horizontal brushing condition; a brush head data analysis module configured to analyze the brush head data to obtain a brush head condition of the smart toothbrush; and a toothbrushing scheme recommendation module configured to form a recommended first toothbrushing scheme according to the toothbrushing duration, the toothbrushing strength, the toothbrushing amplitude, the horizontal brushing condition, and the brush head condition.

A third aspect of embodiments of the present disclosure provides an artificial-intelligence-based toothbrushing recommendation device, which comprises a memory, a processor, and a computer program stored in the memory and being executable in the processor, the processor, when executing the computer program, implements the operations of the artificial-intelligence-based toothbrushing recommendation method according to the above first aspect.

A fourth aspect of embodiments of the present disclosure provides a computer readable storage medium, the computer readable storage medium stores a computer program, the computer program, when being executed by a processor, implements the operations of the artificial-intelligence-based toothbrushing recommendation method according to the above first aspect.

It can be seen from the above technical solutions that embodiments of the present disclosure have the following advantages: in embodiments of the present disclosure, first, toothbrushing data and brush head data detected by a data detection apparatus in a smart toothbrush is acquired; second, the toothbrushing data is analyzed, and a toothbrushing duration, a toothbrushing strength, a toothbrushing amplitude and a horizontal brushing condition of each toothbrushing surface are obtained by statistics; the brush head data is analyzed to obtain a brush head condition of the smart toothbrush; afterwards, a recommended first toothbrushing scheme is formed according to the toothbrushing duration, the toothbrushing strength, the toothbrushing amplitude, the horizontal brushing condition, and the brush head condition. In embodiments of the present disclosure, by collecting toothbrushing data and brush head data in a toothbrushing process of a user, and by analyzing the collected toothbrushing data and brush head data, a toothbrushing scheme suitable for the user is formed and is recommended to the user so as to achieve dynamical adjustment of a toothbrushing scheme in the smart toothbrush, thereby meeting toothbrushing requires of different users and improving applicability of smart toothbrushes.

### BRI EF DESCRIPTION OF THE DRAWINGS

In order to describe technical solutions of embodiments of the present disclosure more clearly, drawings required being used in description of the embodiments or of the prior art will be simply introduced below. Obviously, the drawings in the following description are merely some embodiments of the present disclosure. For one of ordinary skill in the art, it is also possible to obtain other drawings according to these drawings without paying any creative work.
FIG. 1 is a method flowchart of an artificial-intelligence-based toothbrushing recommendation method provided by a first embodiment of the present disclosure.
FIG. 2 is a schematic flowchart of determining a toothbrushing surface in an application scene in an artificial-intelligence-based toothbrushing recommendation method of the first embodiment of the present disclosure.
FIG. 3 is a schematic flowchart of determining an original toothbrushing scheme in an application scene in an artificial-intelligence-based toothbrushing recommendation method of the first embodiment of the present disclosure.
FIG. 4 is a structural schematic view of an artificial-intelligence-based toothbrushing recommendation apparatus provided by a second embodiment of the present disclosure.
FIG. 5 is a structural schematic view of an artificial-intelligence-based toothbrushing recommendation device provided by a third embodiment of the present disclosure.

### DETAILED DESCRIPTION

Embodiments of the present disclosure provide an artificial-intelligence-based toothbrushing recommendation method, a recommendation apparatus, a recommendation device, and a storage medium, which are configured to recommend corresponding toothbrushing schemes to users according to toothbrushing data of users and brush head data of smart toothbrushes, so as to dynamically adjust toothbrushing schemes in smart toothbrushes, thereby meeting toothbrushing requires of different users and improving applicability of smart toothbrushes.

In order to make invention purposes, features, and advantages of the present disclosure be more apparent and understandable, technical solutions of embodiments of the present disclosure will be clearly and completely described below with reference to the drawings in the embodiments of the present disclosure. Obviously, the described embodiments are merely some embodiments, but not all embodiments of the present disclosure. Based on the embodiments of the present disclosure, all of the other embodiments obtained by one of ordinary skill in the art without making any creative work belong to the protection scope of the present disclosure.

The term "comprise" and any variations thereof in the specification, claims, and above-mentioned drawings of the present disclosure are intended to cover non-exclusive inclusions. For example, a process, method, system, product, or device comprising a series of steps or units is not limited to the listed steps or units, but optionally further comprises unlisted steps or units, or optionally further comprises other steps or units inherent in the process, method, product or device. In addition, the terms "first", "second", and "third" are used to distinguish different objects, rather than describing a specific order.

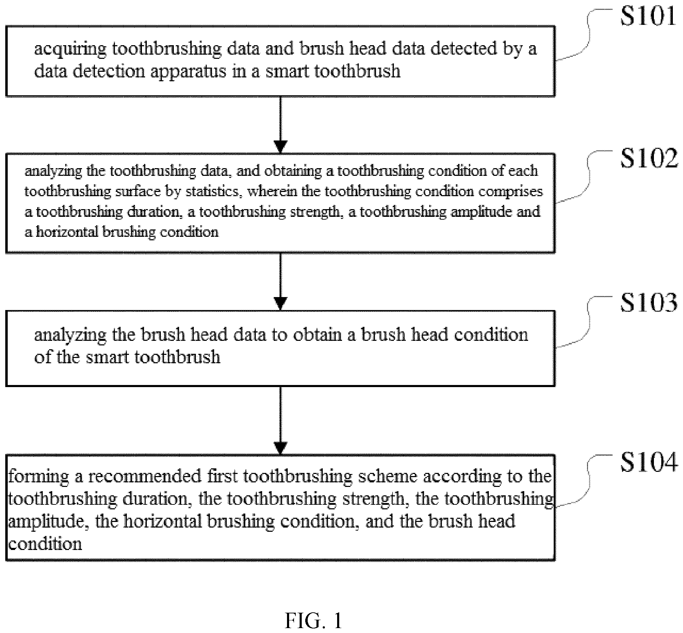

As shown in FIG. 1, a first embodiment of the present disclosure provides an artificial-intelligence-based toothbrushing recommendation method, the toothbrushing recommendation method comprises the following operations.

Operation S101, toothbrushing data and brush head data detected by a data detection apparatus in a smart toothbrush is acquired.

Herein, the data detection apparatus comprises a gesture sensor, a pressure sensor, an NFC label, and a label read-write apparatus. Therefore, acquiring toothbrushing data and brush head data detected by the data detection apparatus in the smart toothbrush specifically comprises: acquiring first toothbrushing data output by the gesture sensor, second toothbrushing data output by the pressure sensor, and brush head data collected by the NFC label and read by the label read-write apparatus.

In this embodiment, the smart toothbrush is provided with the gesture sensor, the pressure sensor, the NFC label, and the label read-write apparatus. The gesture sensor can be used to detect various toothbrushing data when a user uses the smart toothbrush to execute toothbrushing actions, for example, the smart toothbrush is provided with a three-axis acceleration sensor, when executing toothbrushing actions, the three-axis acceleration sensor can detect accelerations of the smart toothbrush in three axial directions X, Y, Z; for another example, the smart toothbrush can also be provided with a three-axis gyroscope, when executing toothbrushing actions, the three-axis gyroscope can detect angular velocities of the smart toothbrush in three axial directions X, Y, Z. The pressure sensor can be used to detect pressure extents on different toothbrushing surfaces when a user executes toothbrushing actions. A brush head of the smart toothbrush is provided with the NFC label, which can be used to detect the number of days of using the brush head; the smart toothbrush is further provided with the label read-write apparatus so as to read data of the number of days of using the brush head detected by the NFC label and thereby determine the brush head condition according to the number of days of using.

Operation S102, the toothbrushing data is analyzed, and a toothbrushing condition of each toothbrushing surface is obtained by statistics; wherein the toothbrushing condition comprises a toothbrushing duration, a toothbrushing strength, a toothbrushing amplitude and a horizontal brushing condition.

Specifically, the toothbrushing data comprises a three-axis acceleration output by the three-axis acceleration sensor and a three-axis angular velocity output by the three-axis gyroscope.

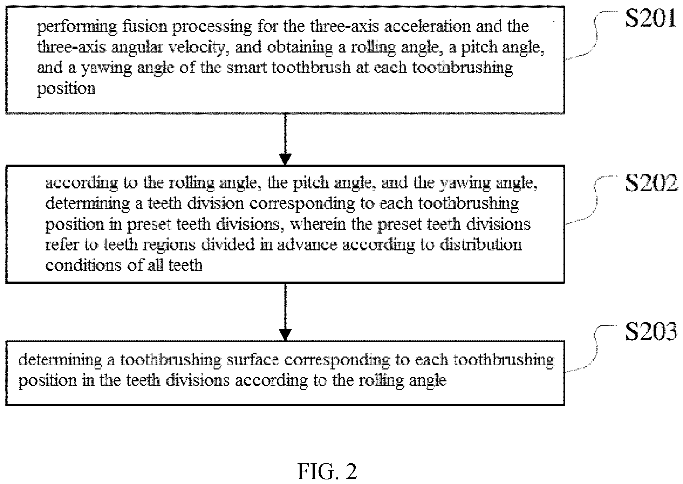

Correspondingly, as shown in FIG. 2, analyzing the toothbrushing data comprises:
Operation S201, fusion processing for the three-axis acceleration and the three-axis angular velocity is performed, and a rolling angle, a pitch angle, and a yawing angle of the smart toothbrush at each toothbrushing position are obtained.
Operation S202, according to the rolling angle, the pitch angle, and the yawing angle, a teeth division corresponding to each toothbrushing position is determined in preset teeth divisions, wherein the preset teeth divisions refer to teeth regions divided in advance according to distribution conditions of all teeth.
Operation S203, a toothbrushing surface corresponding to each toothbrushing position in the teeth divisions is determined according to the rolling angle.

In the operation S201, after acquiring the three-axis acceleration output by the three-axis acceleration sensor and the three-axis angular velocity output by the three-axis gyroscope, Kalman filtering processing for the three-axis acceleration and the three-axis angular velocity is performed, and Madgwick gesture fusion processing for the three-axis acceleration and the three-axis angular velocity after the filtering processing is performed, so as to obtain three kinds of gesture data of the smart toothbrush at a current toothbrushing position: the rolling angle Roll, the pitch angle Pitch, and the yawing angle Yaw.

It can be understood that, in order to improve accuracy of data detection, in this embodiment, the smart toothbrush can also be provided with a three-axis geomagnetic sensor, which is used to correct detection data drifts of the three-axis acceleration sensor and the three-axis gyroscope.

Herein, the preset teeth divisions refer to teeth regions divided in advance according to distribution conditions of all teeth in a mouth cavity of a human body. For example, taking 32 teeth of an adult as an example, the 32 teeth can be divided into 6 teeth divisions: left maxillary region, middle maxillary region, right maxillary region, left mandible region, middle mandible region, right mandible region. Wherein, the left maxillary region includes a first premolar, a second premolar, a first molar, a second molar, and a third molar on the left of a maxillary; the middle maxillary region includes two canines, two lateral incisors, and two central incisors on a maxillary; the right maxillary region includes a first premolar, a second premolar, a first molar, a second molar, and a third molar on the right of a maxillary; the left mandible region includes a first premolar, a second premolar, a first molar, a second molar, and a third molar on the left of a mandible; the middle mandible region includes two canines, two lateral incisors, and two central incisors on a mandible; the right mandible region includes a first premolar, a second premolar, a first molar, a second molar, and a third molar on the right of a mandible. At the same time, on the basis that the left maxillary region, the right maxillary region, the left mandible region, and the right mandible region each includes an outside surface, an inside surface, and an occlusal surface, and the middle maxillary region and the middle mandible region each includes an outside surface and an inside surface, the 6 teeth divisions can be further divided into 16 toothbrushing surfaces.

In the operations S202 and S203, it is mainly based on the rolling angle Roll and the yawing angle Yaw to determine which region in the 6 teeth divisions a current toothbrushing position is located in, for example, determine that it is located in the left maxillary region, in the middle mandible region, or in the right maxillary region. After determining a toothbrushing region of a current toothbrushing position, which toothbrushing surface in the toothbrushing region the current toothbrushing position is located in is further determined according to the rolling angle Roll, for example, when it is first determined that the current toothbrushing position is in the left maxillary region, it is further determine which of the outside surface, the inside surface, and the occlusal surface of the left maxillary region the current toothbrushing position is in. Wherein, the pitch angle Pitch can also be used to assist determining the teeth division and the toothbrushing surface where the current toothbrushing position is located.

It can be understood that, when a user starts from a preset original teeth division, and perform real-timely guided toothbrushing in a predetermined toothbrushing sequence, the smart toothbrush can be only provided with a three-axis acceleration sensor, so as to obtain a rolling angle and a pitch angle of the smart toothbrush executing toothbrushing actions according to a three-axis acceleration acquired by the three-axis acceleration sensor, and thereby according to a toothbrushing region and corresponding rolling and pitch angles in the current real-time guide process, determine a toothbrushing surface corresponding to the current toothbrushing position in the toothbrushing region. Herein, the original teeth division can be self-defined by a user in a using process.

It can be understood that, in this embodiment, it is possible to automatically identify left-handed and right-handed toothbrushing persons by comparing a yawing angle Yaw of a current toothbrushing region with a yawing angle Yaw of a previous toothbrushing region, so that collecting the toothbrushing data with a three-axis acceleration sensor and a three-axis gyroscope, or with a three-axis acceleration sensor, a three-axis gyroscope, and a three-axis geomagnetic sensor can avoid effect of using different hands to brush teeth on collection of the toothbrushing data, thereby ensuring accuracy and availability of data collection.

Further, in this embodiment, obtaining a toothbrushing condition of each toothbrushing surface by statistics comprises: obtaining a toothbrushing duration of each toothbrushing surface by statistics, obtaining a toothbrushing strength of each toothbrushing surface by statistics, obtaining a toothbrushing amplitude of each toothbrushing surface by statistics, and obtaining a horizontal brushing condition of each toothbrushing surface by statistics. Wherein, obtaining a toothbrushing duration of each toothbrushing surface by statistics specifically comprises: operation a, counting a total toothbrushing duration during which the smart toothbrush performs toothbrushing actions on each toothbrushing surface; operation b, acquiring a mistaken toothbrushing duration during which the toothbrushing actions are performed on each toothbrushing surface and the pitch angle of the smart toothbrush is larger than a preset pitch angle; operation c, subtracting the mistaken toothbrushing duration from the total toothbrushing duration to obtain a toothbrushing duration of each toothbrushing surface.

Herein, the toothbrushing refers to an effective toothbrushing duration during which toothbrushing actions of a user is correct. In this embodiment, after determining a teeth division and a toothbrushing surface of a current toothbrushing position accurately, a total toothbrushing duration during which a user uses the smart toothbrush to perform toothbrushing actions on the current toothbrushing surface is recorded and counted, and a pitch angle Pitch of the smart toothbrush on the current toothbrushing surface is detected real-timely; when the detected pitch angle Pitch is larger than a preset pitch angle, for example, assuming that the preset pitch angle is 70°, thus when the pitch angle Pitch of the smart toothbrush is larger than 70°, it is considered that the smart toothbrush is in a mistaken toothbrushing state being close to upright at this time, and a mistaken toothbrushing duration during which the mistaken toothbrushing state exists is recorded; finally, the mistaken toothbrushing duration is subtracted from the total toothbrushing duration to obtain the toothbrushing duration on the current toothbrushing surface.

Further, in this embodiment, the pressure sensor in the smart toothbrush can be used to real-timely detect a pressure applied on each toothbrushing surface when a user performs a toothbrushing process, so as to obtain a toothbrushing strength on each toothbrushing surface by statistics according to the detected pressure.

Optionally, in this embodiment, obtaining a toothbrushing amplitude of each toothbrushing surface by statistics comprises: operation d, calculating an acceleration variance of the smart toothbrush on the current toothbrushing surface according to an acceleration in the X-axis on the current toothbrushing surface output by the three-axis acceleration sensor; operation e, determining a toothbrushing amplitude of the current toothbrushing surface according to the acceleration variance.

Herein, preset correspondence relationships between the acceleration variance and the toothbrushing amplitude can be set in advance. When the smart toothbrush performs toothbrushing actions on a certain toothbrushing surface, an acceleration variance of an acceleration in the X-axis on the current toothbrushing surface output by the three-axis acceleration sensor of the smart toothbrush is calculated real-timely; after obtaining the acceleration variance, according to the preset correspondence relationships between the acceleration variance and the toothbrushing amplitude, the toothbrushing amplitude of the current toothbrushing surface is obtained by statistics.

Further, obtaining a horizontal brushing condition of each toothbrushing surface by statistics specifically comprises: operation f, according to an acceleration in the X-axis on the current toothbrushing surface output by the three-axis acceleration sensor, calculating a swing amplitude and a swing frequency of the smart toothbrush on the current toothbrushing surface; operation g, when the swing amplitude is larger than a standard swing amplitude in a preset standard toothbrushing model, and/or the swing frequency is larger than a standard swing frequency in a preset standard toothbrushing model, it is determined that a horizontal brushing condition exists on the current toothbrushing surface, and the number of times of horizontally brushing on the current toothbrushing surface is added by one unit of the number of times.

Herein, in embodiments of the present disclosure, the number of times of horizontally brushing appearing on the current toothbrushing surface can be determined according to a change of the swing amplitude or a change of the swing frequency of the smart toothbrush. For example, assuming that a standard swing frequency in a preset standard toothbrushing model is 2Hz, thus when a swing frequency of the smart toothbrush on the current toothbrushing surface is larger than 2Hz, it is indicated that the toothbrushing action on the current toothbrushing surface is horizontally brushing at this time, and the number of times of horizontally brushing on the current toothbrushing surface is added by one unit of the number of times, for example, added by once. It can be understood that embodiments of the present disclosure can also combine changes of the two to determine the number of times of horizontally brushing appearing on the current toothbrushing surface cooperatively.

Operation S103, according to the toothbrushing duration, the toothbrushing strength, the toothbrushing amplitude, the horizontal brushing condition, and the brush head condition, a recommended first toothbrushing scheme is formed.

In this embodiment, forming a recommended first toothbrushing scheme according to the toothbrushing duration, the toothbrushing strength, the toothbrushing amplitude, the horizontal brushing condition, and the brush head condition specifically comprises: operation h, determining a teeth condition of each toothbrushing surface according to the toothbrushing duration, the toothbrushing strength, the toothbrushing amplitude, the horizontal brushing condition; operation i, forming the recommended first toothbrushing scheme according to the teeth condition of each toothbrushing surface and the brush head condition.

Regarding the above operation h, after obtaining the toothbrushing duration of each toothbrushing surface by statistics, the toothbrushing duration of each toothbrushing surface is compared with a first preset toothbrushing duration and a second preset toothbrushing duration, so as to determine the tooth condition of each toothbrushing surface, that is, determine effect on teeth when a user performs toothbrushing actions with corresponding durations on various toothbrushing surfaces. Wherein, the first preset toothbrushing duration is the shortest duration for achieving the purpose of cleaning teeth, and the second preset toothbrushing duration is the shortest duration of causing abrasion of teeth. The first preset toothbrushing duration and the second preset toothbrushing duration can be analyzed and determined according to a large amount of historical toothbrushing data. When a toothbrushing duration of a certain toothbrushing surface is less than the first preset toothbrushing duration, it is indicated that the user's toothbrushing time on the toothbrushing surface is too short and cannot achieve the purpose of cleaning teeth, thereby resulting in that teeth of this toothbrushing surface are prone to accumulate plaque, soft dirt, etc. When a toothbrushing duration of a certain toothbrushing surface is larger than the second preset toothbrushing duration, it is indicated that the user's toothbrushing time on the toothbrushing surface is too long, and teeth of this toothbrushing surface are prone to be worn. In this way, it is possible to determine teeth conditions of each toothbrushing surface, such as teeth with accumulated plaque or soft dirt, or teeth being prone to be worn.

For example, in a certain specific application, it is analyzed and determined according to a large amount of historical toothbrushing data that the first preset toothbrushing duration is 5 seconds, and the second preset toothbrushing duration is 10 seconds; in a certain toothbrushing process of a user, a toothbrushing duration for performing toothbrushing actions on an inside surface of a left mandible region is 3 seconds, and a toothbrushing duration for performing toothbrushing actions on an outside surface of a left maxillary region is 60 seconds, it can then be determined that the first premolar, the second premolar, the first molar, the second molar, and the third molar on the left of the mandible of the user are teeth with accumulated plaque and soft dirt, and the first premolar, the second premolar, the first molar, the second molar, and the third molar on the left of the maxillary are teeth being prone to be worn.

Further, after obtaining the toothbrushing strength of each toothbrushing surface by statistics, the toothbrushing strength of each toothbrushing surface is compared with a first preset toothbrushing strength and a second preset toothbrushing strength, so as to determine the tooth condition of each toothbrushing surface, that is, determine effect on teeth when a user performs toothbrushing actions with corresponding toothbrushing strengths on various toothbrushing surfaces. Wherein, the first preset toothbrushing strength is the minimum strength for achieving the purpose of cleaning teeth, and the second preset toothbrushing strength is the minimum strength of causing abrasion of teeth. The first preset toothbrushing strength and the second preset toothbrushing strength can be analyzed and determined according to a large amount of historical toothbrushing data. When a toothbrushing strength of a certain toothbrushing surface is less than the first preset toothbrushing strength, it is indicated that the user's toothbrushing strength on the toothbrushing surface is too small and cannot achieve the purpose of cleaning teeth, thereby resulting in that teeth of this toothbrushing surface are prone to accumulate plaque, soft dirt, etc. When a toothbrushing strength of a certain toothbrushing surface is larger than the second preset toothbrushing strength, it is indicated that the user's toothbrushing strength on the toothbrushing surface is too big, and teeth of this toothbrushing surface are prone to be worn. In this way, it is possible to determine teeth conditions of each toothbrushing surface, such as teeth with accumulated plaque or soft dirt, or teeth being prone to be worn.

For example, in a certain specific application, it is analyzed and determined according to a large amount of historical toothbrushing data that the first preset toothbrushing strength is 0.49N, and the second preset toothbrushing strength is 1.47N; in a certain toothbrushing process of a user, it is detected that a toothbrushing strength for the user to perform toothbrushing actions on an inside surface of a middle maxillary region is 1.6N, and a toothbrushing strength for performing toothbrushing actions on an outside surface of a right maxillary region is 0.3N, it can then be determined that the two canines, the two lateral incisors, and the two central incisors on the maxillary of the user are teeth being prone to be worn, and the first premolar, the second premolar, the first molar, the second molar, and the third molar on the right of the maxillary are teeth with accumulated plaque and soft dirt.

Optionally, after obtaining the toothbrushing amplitude of each toothbrushing surface by statistics, the toothbrushing amplitude of each toothbrushing surface is compared with a first preset toothbrushing amplitude and a second preset toothbrushing amplitude, so as to determine the tooth condition of each toothbrushing surface, that is, determine effect on teeth when a user performs toothbrushing actions with corresponding toothbrushing amplitudes on various toothbrushing surfaces. Wherein, the first preset toothbrushing amplitude is the minimum amplitude for achieving the purpose of cleaning teeth, and the second preset toothbrushing amplitude is the minimum toothbrushing amplitude of causing abrasion of teeth. The first preset toothbrushing amplitude and the second preset toothbrushing amplitude can be analyzed and determined according to a large amount of historical toothbrushing data. When a toothbrushing amplitude of a certain toothbrushing surface is less than the first preset toothbrushing amplitude, it is indicated that the user's toothbrushing amplitude on the toothbrushing surface is too small and cannot achieve the purpose of cleaning teeth, thereby resulting in that teeth of this toothbrushing surface are prone to accumulate plaque, soft dirt, etc. When a toothbrushing amplitude of a certain toothbrushing surface is larger than the second preset toothbrushing amplitude, it is indicated that the user's toothbrushing amplitude on the toothbrushing surface is too big, and teeth of this toothbrushing surface are prone to be worn. In this way, it is possible to determine teeth conditions of each toothbrushing surface, such as teeth with accumulated plaque or soft dirt, or teeth being prone to be worn.

Optionally, after obtaining the horizontal brushing condition of each toothbrushing surface by statistics, that is, obtaining the number of times of horizontally brushing of each toothbrushing surface, the number of times of horizontally brushing of each toothbrushing surface is compared with a preset threshold number of times, so as to determine whether each a toothbrushing surface is a horizontally brushed surface; since horizontally brushing is likely to cause abrasion of teeth, when a certain toothbrushing surface is determined as a horizontally brushed surface, it can be determined that teeth in the horizontally brushed surface are teeth being prone to be worn. Wherein, the preset threshold number of times is the minimum number of times of horizontally brushing causing abrasion of teeth. The preset threshold number of times can be analyzed and determined according to a large amount of historical toothbrushing data.

In this embodiment, although the above description only specifically describes determining teeth conditions of various toothbrushing surfaces according to the toothbrushing duration, the toothbrushing strength, the toothbrushing amplitude, and the horizontal brushing condition respectively, it can be understood that this embodiment can also combine the toothbrushing duration and the toothbrushing strength to determine teeth conditions of various toothbrushing surfaces, for example, it can be determined that teeth of which a toothbrushing duration is less than a third preset toothbrushing duration and a toothbrushing strength is less than a third preset toothbrushing strength are teeth with accumulated plaque or soft dirt, and teeth of which a toothbrushing duration is larger than a fourth preset toothbrushing duration and a toothbrushing strength is larger than a fourth preset toothbrushing strength are teeth being prone to be worn. Similarly, the third preset toothbrushing duration, the third preset toothbrushing strength, the fourth preset toothbrushing duration, and the fourth preset toothbrushing strength can be analyzed and determined according to a large amount of historical toothbrushing data. Of course, it is also possible to combine the toothbrushing duration, the toothbrushing strength, and the toothbrushing amplitude to determine teeth conditions of various toothbrushing surfaces, and it is also possible to combine the toothbrushing duration, the toothbrushing strength, the toothbrushing amplitude, and the horizontal brushing condition to determine teeth conditions of various toothbrushing surfaces.

Regarding the above operation i, after the teeth condition of each toothbrushing surface is determined, the recommended first toothbrushing scheme can thus be formed according to the teeth condition and the brush head condition of each toothbrushing surface. Wherein, parameters included in the first toothbrushing scheme are a toothbrushing duration, and a vibration frequency and a swing amplitude of the smart toothbrush. That is, after the teeth condition of each toothbrushing surface is determined, according to the teeth condition and the brush head condition of each toothbrushing surface, a toothbrushing strength and a toothbrushing duration being suitable for the smart toothbrush to perform toothbrushing actions in various toothbrushing surfaces are determined, so that the vibration frequency and the swing amplitude of the smart toothbrush in the first toothbrushing scheme are determined according to a suitable toothbrushing strength, and the toothbrushing duration in the first toothbrushing scheme is determined according to a suitable toothbrushing duration.

Herein, it is possible to first determine a pre-recommended vibration frequency and swing amplitude according to the teeth condition of each toothbrushing surface for correspondence; afterwards, it is possible to perform corresponding adjustment for the pre-recommended vibration frequency and swing amplitude according to the brush head condition. For example, regarding a brush head of which the number of days in use is 0-30 days, it can be determined that the brush head condition is that the bristles are complete, a contact area between the bristles and teeth is the largest when brushing teeth, and there is good cleaning effect for tooth surfaces and slits between teeth; therefore, at this time, it is possible to keep the pre-recommended swing amplitude being unchanged, while reduce the pre-recommended vibration frequency by 10%-20% correspondingly, so as to reduce uncomfortable feeling caused by too large vibration when a new user uses a toothbrush or when an old user uses a new brush head at the same time of achieving good cleaning effect. Regarding a brush head of which the number of days in use is 31-60 days, it can be determined that the brush head condition is that the integrity of the bristles is lower than that of a brush head used for 0-30 days, that is, some bristles have deformation and bending in certain extents, the bristles appear loosing in a certain extent, and a contact area between the bristles and teeth relatively decreases when brushing teeth; therefore, in order to achieve optimal cleaning effect, at this time, it is possible to increase the pre-recommended vibration frequency by 10%-20% correspondingly, and appropriately reduce the pre-recommended swing amplitude, for example, by 10%-20%. Regarding a brush head of which the number of days in use is 61-90 days, it can be determined that the brush head condition is that the integrity of the bristles is lower than that of a brush head used for 31-60 days, that is, most bristles in the brush head have deformation and bending phenomena, thereby resulting in that cleaning efficiency of the bristles for slits between teeth decreases sharply, and the bristles appear a fluffy and diffused state on the whole; at this time, a relatively large swing amplitude may do harm to the gingiva, meanwhile, since the support effect of the tops of the bristles reduces, when a user brushes teeth with the same strength as before, strong friction between a hard portion of the brush head and surfaces of teeth may be caused, and enamel is prone to be hurt; therefore, in order to protect health of teeth of users first, the pre-recommended vibration frequency and swing amplitude should be greatly reduced, for example, the pre-recommended vibration frequency is reduced by 30%-50%, and the pre-recommended swing amplitude is reduced by 40%-60%. Regarding a brush head of which the number of days in use exceeds 90 days, it can be determined that the brush head condition is a scrapped brush head; therefore, the pre-recommended vibration frequency and swing amplitude can be greatly reduced, for example, both the pre-recommended vibration frequency and the pre-recommended swing amplitude are reduced by 70%-100%, so as to prevent the scrapped brush head from causing serious injury to teeth of users.

If a teeth condition of a certain toothbrushing surface is determined as teeth with accumulated plaque and soft dirt, and the brush head condition is a condition that the bristles are used for 0-30days and complete, it is possible to first form a relatively large pre-recommended vibration frequency and swing amplitude to correspond to the toothbrushing surface, and then, on this basis, reduce the pre-recommended vibration frequency by 10%-20%, so that a suitable vibration frequency and swing amplitude are determined in the first toothbrushing scheme to correspond to the toothbrushing surface; afterwards, when the user brushes the toothbrushing surface, the smart toothbrush automatically performs toothbrushing actions with such vibration frequency and swing amplitude, thereby achieving the purpose of cleaning plaque and soft dirt. If a teeth condition of a certain toothbrushing surface is determined as teeth being prone to be worn, and the brush head condition is a condition that some bristles are used for 31-60 days and have deformation and bending in certain extents, it is possible to first form a pre-recommended vibration frequency and swing amplitude to correspond to the toothbrushing surface, and then, on this basis, increase the pre-recommended vibration frequency by 10%-20% and reduce the pre-recommended swing amplitude by 10%-20%, so that a suitable vibration frequency and swing amplitude are determined in the first toothbrushing scheme to correspond to the toothbrushing surface; afterwards, when the user brushes the toothbrushing surface, the smart toothbrush can automatically perform toothbrushing actions with such vibration frequency and swing amplitude, thereby avoiding from doing harm to teeth.

It can be understood that the above described division of the number of days of using the brush head, such as 0-30 days, 31-60 days, 61-90 days, and more than 90 days, are only for schematic explanation, and should not be regarded as limitation to embodiments of the present disclosure. In embodiments of the present disclosure, it is certainly also possible to perform specific division of the number of days of using according to specific conditions of toothbrushes. Meanwhile, 10%-20%, 30%-50%, 40%-60%, and 70%-100% of changes of the vibration frequency and the swing amplitude are also only for schematic explanation; in this embodiment, it is certainly possible to perform specific setting according to specific conditions of toothbrushes.

Preferably, in this embodiment, after forming a recommended first toothbrushing scheme according to the toothbrushing duration, the toothbrushing strength, the toothbrushing amplitude, the horizontal brushing condition, and the brush head condition, the toothbrushing recommendation method further comprises: operation j, receiving a second selection operation of the user for the first toothbrushing scheme, and determining whether the first toothbrushing scheme is accepted according to the second selection operation; operation k, when the first toothbrushing scheme is accepted, pushing the first toothbrushing scheme to the smart toothbrush to perform adjustment of toothbrushing parameters.

It can be understood that, after forming the recommended first toothbrushing scheme, the cloud can recommend the first toothbrushing scheme to a user, then the first toothbrushing scheme can be displayed in a display interface of a user APP or a display surface of the smart toothbrush, and a selection operation of the user for the first toothbrushing scheme is received. If the user selects to accept or immediately use the first toothbrushing scheme, the cloud further pushes the first toothbrushing scheme to the smart toothbrush, so as to perform adjustment or modification for toothbrushing parameters in existing toothbrushing schemes in the smart toothbrush, so that toothbrushing actions can be performed according to the first toothbrushing scheme during a subsequent toothbrushing process of the user, thereby achieving the purpose of cleaning teeth and avoiding from doing harm to teeth. Of course, if the user does not accept the first toothbrushing scheme, existing toothbrushing parameters in the smart toothbrush will not be adjusted or modified, so that a previous toothbrushing scheme is maintained to perform subsequent toothbrushing actions.

In order to facilitate understanding, according to the embodiment described in FIG. 1, determining an original toothbrushing scheme using an artificial-intelligence-based toothbrushing recommendation method of a first embodiment of the present disclosure is described below with an actual application scene.

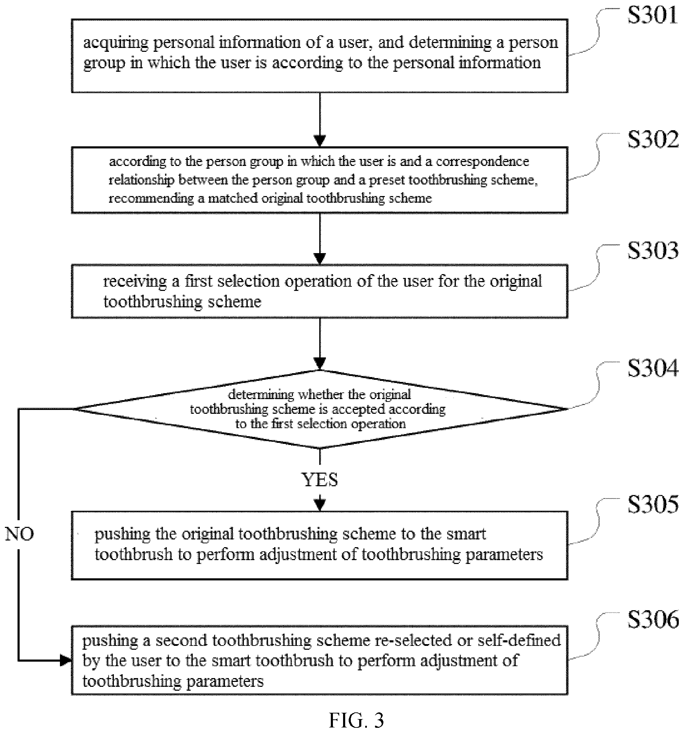

FIG. 3 shows a schematic flowchart of determining an original toothbrushing scheme in an application scene in an artificial-intelligence-based toothbrushing recommendation method of an embodiment of the present disclosure. As shown in FIG. 3, in this scene, the toothbrushing recommendation method further comprises the following operations.

Operation S301, personal information of a user is acquired, and a person group in which the user is is determined according to the personal information.

Operation S302, according to the person group in which the user is and a correspondence relationship between the person group and a preset toothbrushing scheme, a matched original toothbrushing scheme is recommended.

Operation S303, a first selection operation of the user for the original toothbrushing scheme is received.

Operation S304, whether the original toothbrushing scheme is accepted is determined according to the first selection operation.

Operation S305, when the original toothbrushing scheme is accepted, the original toothbrushing scheme is pushed to the smart toothbrush to perform adjustment of toothbrushing parameters.

Operation S306, when the original toothbrushing scheme is not accepted, a second toothbrushing scheme re-selected or self-defined by the user is pushed to the smart toothbrush to perform adjustment of toothbrushing parameters.

It can be understood that the first toothbrushing scheme formed in this embodiment is determined based on toothbrushing data generated by toothbrushing actions performed by a user, therefore, before acquiring the toothbrushing data generated by toothbrushing actions performed by a user, it is required to determine an original toothbrushing scheme of the smart toothbrush, so that the user can perform toothbrushing actions according to the original toothbrushing scheme, thereby generating subsequent toothbrushing data. In this embodiment, before the user originally uses the smart toothbrush to perform toothbrushing actions, it is possible to match the original toothbrushing scheme according to a smart brush head with an NFC label selected by the user; of course, it is also possible to match the original toothbrushing scheme and a corresponding smart brush head according to collected personal information of the user. In this embodiment, preferably, the matched original toothbrushing scheme is recommended according to collected personal information of the user.

In this embodiment, the cloud sets and stores many kinds of different preset toothbrushing schemes in advance. Toothbrushing parameters of these preset toothbrushing schemes include toothbrushing durations, vibration frequencies, and swing amplitudes, for example, a morning high-effect cleaning scheme adopts a toothbrushing duration of 2 minutes, a vibration frequency of 38000 times per minute, and a swing amplitude of 5 mm to 6mm; for another instance, a firstly-used cleaning scheme adopts a toothbrushing duration of 2.5 minutes, a vibration frequency of 35000 times per minute, and a swing amplitude of 4 mm to 5mm; a cleaning scheme for tobacco stains, tea stains, and coffee stains adopts a toothbrushing duration of 3 minutes, a circularly and gradually changing vibration frequency of 21000 to 38000 times per minute in the ahead 2 minutes, a swing amplitude of 5mm to 6mm in the ahead 2 minutes, and a vibration frequency of 35000 times per minute and a swing amplitude of 4mm to 5mm in the later 1 minute.

It can be understood that in this embodiment, when presetting these preset toothbrushing schemes, the cloud can correspondingly determine person groups being suitable for the preset toothbrushing schemes to form preset correspondence relationships therewith, for example, it can be determined that person groups being suitable for the cleaning scheme for tobacco stains, tea stains, and coffee stains are persons smoking, persons daily drinking much tea, and persons daily drinking much coffee, that is, a preset correspondence relationship is formed between the cleaning scheme for tobacco stains, tea stains, and coffee stains and the persons smoking, the persons daily drinking much tea, and the persons daily drinking much coffee.

Regarding the above operation S301, when a user selects to use a smart toothbrush to brush teeth, he/she can register a user account through a corresponding APP, so that personal information of the user is acquired through account register, for example, the user's personal information such as gender, age, teeth whitening extent, eating habits, and teeth health condition are acquired. Herein, the eating habit information includes information such as whether often smoking, drinking tea, drinking coffee, drinking carbonated beverages, etc.; the teeth health condition information includes information such as whether there is orthodontic teeth, tooth decay, gingivitis, periodontitis, dental implants, dental cleaning, etc. Of course, in this embodiment, it is also possible to acquire personal information of the user through other smart devices added by the user, and it is also possible to acquire personal information of the user through account information of associated third party applications. After acquiring personal information of the user, determining a person group in which the user is according to the personal information.

That is, after determining personal information of the user, it is possible to determine a person group in which the user is according to the personal information. If the user has a habit of often drinking tea or drinking coffee, it can be determined that a person group in which the user is is a smoke stain, tea stain, and coffee stain group; if the user has tooth decay, gingivitis, or periodontitis, it can be determined that a person group in which the user is is a tooth decay, gingivitis, and periodontitis group; if the user has a dental implant, it can be determined that a person group in which the user is is a dental implant group, if the user is a old man or a child, or has a gingiva being easy to bleed, it can be determined that a person group in which the user is is a gently protecting gingiva group; if the user has an artificial tooth, it can be determined that a person group in which the user is is an artificial tooth group.

Regarding the operation S302, after determining a person group in which the user is according to the personal information of the user, an original toothbrushing scheme matching with the person group in which the user is is recommended according to the correspondence relationships between person groups and preset toothbrushing schemes. For example, a preset toothbrushing scheme corresponding to the smoke stain, tea stain, and coffee stain group is a cleaning scheme for smoke stains, tea stains, and coffee stains; a preset toothbrushing scheme corresponding to the tooth decay, gingivitis, and periodontitis group is a tooth decay, gingivitis, and periodontitis cleaning and nursing scheme; and a preset toothbrushing scheme corresponding to the gently protecting gingiva group is a gently cleaning and protecting gingiva scheme. Therefore, when determining that the person group in which the user is is the smoke stain, tea stain, and coffee stain group, the matched original toothbrushing scheme is the cleaning scheme for smoke stains, tea stains, and coffee stain; when determining that the person group in which the user is is the tooth decay, gingivitis, and periodontitis group, the matched original toothbrushing scheme is the tooth decay, gingivitis, and periodontitis cleaning and nursing scheme; when determining that the person group in which the user is is the gently protecting gingiva group, the matched original toothbrushing scheme is the gently cleaning and protecting gingiva scheme.

It can be understood that the above exemplified preset toothbrushing schemes are only for schematic explanation, and should not be regarded as limitation to embodiments of the present disclosure. Embodiments of the present disclosure can certainly also include other various preset toothbrushing schemes, for example, include a morning high-effect tooth brushing scheme, a cleaning scheme before sleeping, a quickly cleaning scheme after meal, a firstly-used cleaning scheme, a standard cleaning scheme, a strong cleaning scheme, an extreme cleaning scheme, a whitening cleaning scheme, an orthodontic cleaning and massaging scheme, a cleaning and nursing scheme after scaling teeth or operation, a special cleaning scheme in pregnancy, a dental implant cleaning scheme, a cleaning and maintaining scheme for artificial teeth, and so on, and the preset toothbrushing schemes respectively correspond to different person groups.

It can be understood that in this embodiment, the teeth health condition information acquired based on the personal information of the user can be automatically memorized and stored. When forming the recommended first toothbrushing scheme according the acquired toothbrushing data and brush head data, the teeth health condition can be automatically considered therein, for example, when the acquired information of the user indicates that the user has tooth decay or periodontitis, a position of a decayed tooth or a tooth with periodontitis can be automatically marked and stored. Thus, when forming the recommended first toothbrushing scheme, it is possible to set a relatively small vibration frequency and swing amplitude to correspond to the decayed tooth or tooth with periodontitis, so that in a subsequent toothbrushing process, toothbrushing actions are still performed according to normal vibration frequencies and swing amplitudes in other regions, but when brushing the decayed tooth or tooth with periodontitis, toothbrushing actions are performed according to the relatively small vibration frequency and swing amplitude. In other words, when brushing the decayed tooth or tooth with periodontitis, the smart toothbrush can automatically reduce the vibration frequency and swing amplitude, so as to avoid from doing further harm to the decayed tooth or tooth with periodontitis.

Regarding the above operations S303-S305, after recommending the matched original toothbrushing scheme according to the personal information of the user, the cloud can then recommend the original toothbrushing scheme to the user, that is, can display the original toothbrushing scheme in a user APP or a display interface of the smart toothbrush. At this time, it is required for the user to select whether to accept the original toothbrushing scheme. If the user selects to accept or immediately use the original toothbrushing scheme, the cloud further pushes the original toothbrushing scheme to the smart toothbrush, so as to perform setting and adjustment for toothbrushing parameters of the smart toothbrush; afterwards, when the user uses the smart toothbrush to brush teeth, the smart toothbrush performs toothbrushing actions according to modified toothbrush parameters.

Regarding the operation S306, it can be under stood that if the user does not accept the original toothbrushing scheme, it is required for the user to re-select a required toothbrushing scheme from all toothbrushing schemes in the cloud read by the APP. If there is not a toothbrushing scheme required by the user in all of the toothbrushing schemes, the user can also self-define a required toothbrushing scheme; after re-selecting or self-defining is completed, the toothbrushing scheme re-selected by the user or the self-defined toothbrushing scheme is pushed to the smart toothbrush, so as to perform setting and adjustment for the toothbrushing parameters of the smart toothbrush; afterwards, when the user uses the smart toothbrush to brush teeth, the smart toothbrush performs toothbrushing actions according to modified toothbrush parameters.

In this embodiment, the original toothbrushing scheme determined according to the personal information of the user and the first toothbrushing scheme recommended according to the toothbrushing data and the brush head data can be associated with a user account of the user. When the user replaces a smart toothbrush and associates the smart toothbrush after being replaced with the user account, the first toothbrushing scheme or the original toothbrushing scheme can be synchronized to the new smart toothbrush. Specifically, if the user account of the user has already been associated with the first toothbrushing scheme, the first toothbrush scheme can be synchronized to the new smart toothbrush, and the new smart toothbrush can directly perform toothbrushing actions according to the first toothbrushing scheme; if the user account of the user has not been associated with the first toothbrushing scheme, but has been associated with the original toothbrushing scheme, the original toothbrush scheme can be synchronized to the new smart toothbrush, and the new smart toothbrush can directly perform toothbrushing actions according to the original toothbrushing scheme.

In embodiments of the present disclosure, first, toothbrushing data and brush head data detected by a data detection apparatus in a smart toothbrush is acquired; second, the toothbrushing data is analyzed, and a toothbrushing duration, a toothbrushing strength, a toothbrushing amplitude and a horizontal brushing condition of each toothbrushing surface are obtained by statistics; the brush head data is analyzed to obtain a brush head condition of the smart toothbrush; afterwards, a recommended first toothbrushing scheme is formed according to the toothbrushing duration, the toothbrushing strength, the toothbrushing amplitude, the horizontal brushing condition, and the brush head condition. In embodiments of the present disclosure, by collecting toothbrushing data and brush head data in a toothbrushing process of a user, and by analyzing the collected toothbrushing data and brush head data, a toothbrushing scheme suitable for the user is formed and is recommended to the user so as to achieve dynamical adjustment of a toothbrushing scheme in the smart toothbrush, thereby meeting toothbrushing requires of different users and improving applicability of smart toothbrushes.

It should be understood that the values of the sequence numbers of the operations in the above embodiments do not mean the order of execution. The execution sequence of each process should be determined according to its function and internal logic, and should not constitute any limitation to the implementation processes of the embodiments of the present disclosure.

The above mainly describes an artificial-intelligence-based toothbrushing recommendation method. An artificial-intelligence-based toothbrushing recommendation apparatus will be described in detail below.

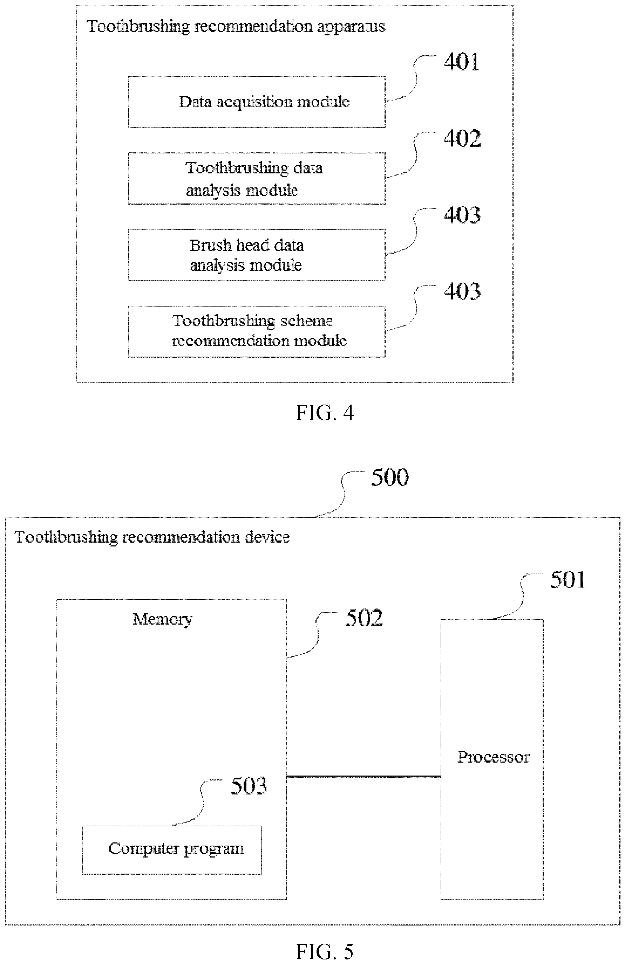

FIG. 4 shows a structural view of an embodiment of an artificial-intelligence-based toothbrushing recommendation apparatus in a second embodiment of the present disclosure. As shown in FIG. 4, the toothbrushing recommendation apparatus comprises: a data acquisition module 401 configured to acquire toothbrushing data and brush head data detected by a data detection apparatus in a smart toothbrush; a toothbrushing data analysis module 402 configured to analyze the toothbrushing data, and obtain a toothbrushing condition of each toothbrushing surface by statistics, wherein the toothbrushing condition comprises a toothbrushing duration, a toothbrushing strength, a toothbrushing amplitude and a horizontal brushing condition; a brush head data analysis module 403 configured to analyze the brush head data to obtain a brush head condition of the smart toothbrush; and a toothbrushing scheme recommendation module 404 configured to form a recommended first toothbrushing scheme according to the toothbrushing duration, the toothbrushing strength, the toothbrushing amplitude, the horizontal brushing condition, and the brush head condition.

Further, the data detection apparatus comprises a gesture sensor, a pressure sensor, an NFC label, and a label read-write apparatus.

Correspondingly, the data acquisition module 401 is specifically configured to acquire first toothbrushing data output by the gesture sensor, second toothbrushing data output by the pressure sensor, and brush head data collected by the NFC label and read by the label read-write apparatus.

Optionally, the toothbrushing recommendation apparatus further comprises: a person group determination module configured to acquire personal information of a user, and determine a person group in which the user is according to the personal information; an original scheme matching module configured to recommend a matched original toothbrushing scheme according to the person group in which the user is and a correspondence relationship between the person group and a preset toothbrushing scheme; an original scheme determination module configured to receive a first selection operation of the user for the original toothbrushing scheme, and determine whether the original toothbrushing scheme is accepted according to the first selection operation; a first pushing adjustment module configured to push the original toothbrushing scheme to the smart toothbrush to perform adjustment of toothbrushing parameters when the original toothbrushing scheme is accepted; and a second pushing adjustment module configured to push a second toothbrushing scheme re-selected or self-defined by the user to the smart toothbrush to perform adjustment of toothbrushing parameters when the original toothbrushing scheme is not accepted.

Optionally, the toothbrushing data comprises a three-axis acceleration output by a three-axis acceleration sensor and a three-axis angular velocity output by a three-axis gyroscope.

Correspondingly, the toothbrushing data analysis module 402 comprises: a fusion processing unit configured to perform fusion processing for the three-axis acceleration and the three-axis angular velocity, and obtain a rolling angle, a pitch angle, and a yawing angle of the smart toothbrush at each toothbrushing position; a position determination unit configured to determine a teeth division corresponding to each toothbrushing position in preset teeth divisions according to the rolling angle, the pitch angle, and the yawing angle, wherein the preset teeth divisions refer to teeth regions divided in advance according to distribution conditions of all teeth; and a toothbrushing surface determination unit configured to determine a toothbrushing surface corresponding to each toothbrushing position in the teeth divisions according to the rolling angle.

Further, the toothbrushing data analysis module 402 further comprises: a total toothbrushing duration acquisition unit configured to count a total toothbrushing duration during which the smart toothbrush performs toothbrushing actions on each toothbrushing surface; a mistaken toothbrushing duration acquisition unit configured to acquire a mistaken toothbrushing duration during which the toothbrushing actions are performed on each toothbrushing surface and the pitch angle of the smart toothbrush is larger than a preset pitch angle; and a toothbrushing duration acquisition unit configured to subtract the mistaken toothbrushing duration from the total toothbrushing duration to obtain a toothbrushing duration of each toothbrushing surface.

Optionally, the toothbrushing scheme recommendation module 404 specifically comprises: a teeth condition determination unit configured to determine a teeth condition of each toothbrushing surface according to the toothbrushing duration, the toothbrushing strength, the toothbrushing amplitude and the horizontal brushing condition; and a toothbrushing scheme recommendation unit configured to form the recommended first toothbrushing scheme according to the teeth condition of each toothbrushing surface and the brush head condition.

Preferably, the toothbrushing recommendation apparatus further comprises: a first scheme determination module configured to receive a second selection operation of the user for the first toothbrushing scheme, and determine whether the first toothbrushing scheme is accepted according to the second selection operation; and a third pushing adjustment module configured to push the first toothbrushing scheme to the smart toothbrush to perform adjustment of toothbrushing parameters when the first toothbrushing scheme is accepted.

FIG. 5 is a schematic view of an artificial-intelligence-based toothbrushing recommendation device provided by a third embodiment of the present disclosure. As shown in FIG. 5, the toothbrushing recommendation device 500 of this embodiment comprises a processor 501, a memory 502, and a computer program 503 stored in the memory 502 and being executable in the processor 501, such as an artificial-intelligence-based toothbrushing recommendation program. The processor 501, when executing the computer program 503, implements the operations of the above embodiments of the artificial-intelligence-based toothbrushing recommendation method, such as the operation S101 to the operation S104 shown in FIG. 1. Alternatively, the processor 501, when executing the computer program 503, implements functions of the modules/units in the above apparatus embodiments, such as the functions of the module 401 to the module 404 shown in FIG. 4.

Exemplarily, the computer program 503 can be divided into one or more modules/units, the one or more modules/units are stored in the memory 502 and executed by the processor 501 to implement embodiments of the present disclosure. The one or more modules/units can be a series of computer program instruction segments being capable of implementing certain functions, the instruction segments are configured to describe execution processes of the computer program 503 in the toothbrushing recommendation device 500. For example, the computer program 503 can be divided into a data acquisition module, a toothbrushing data analysis module, a brush head data analysis module, and a toothbrushing scheme recommendation module, specifical functions of these modules are as follows: the data acquisition module is configured to acquire toothbrushing data and brush head data detected by a data detection apparatus in a smart toothbrush; the toothbrushing data analysis module is configured to analyze the toothbrushing data, and obtain a toothbrushing condition of each toothbrushing surface by statistics, wherein the toothbrushing condition comprises a toothbrushing duration, a toothbrushing strength, a toothbrushing amplitude and a horizontal brushing condition; the brush head data analysis module is configured to analyze the brush head data to obtain a brush head condition of the smart toothbrush; and the toothbrushing scheme recommendation module is configured to form a recommended first toothbrushing scheme according to the toothbrushing duration, the toothbrushing strength, the toothbrushing amplitude, the horizontal brushing condition, and the brush head condition.

The toothbrushing recommendation device 500 can be computing device such as a desktop computer, a notebook computer, a personal digital assistant, a cloud server, and so on. The toothbrushing recommendation device 500 can comprise, but is not limited to, the processor 501 and the memory 502. One of ordinary skill in the art can understand that FIG. 5 is only an example of the toothbrushing recommendation device 500 and does not form any limitation to the toothbrushing recommendation device 500. The toothbrushing recommendation device 500 can comprise more or less parts than shown in the figures, or combine some parts, or comprise different parts, for example, the toothbrushing recommendation device 500 can further comprise an input/output device, a network access device, a bus, etc.

The processor 501 can be a central processing unit (CPU), and can also be other universal processors, digital signal processors (DSP), application specific integrated circuits (ASIC), field-programmable gate arrays (FPGA), or other programmable logic devices, discrete gates or transistor logic devices, discrete hardware components, and so on. The universal processor can be a microprocessor, or the processor can also be any conventional processor, etc.

The memory 502 can be an internal storage unit of the toothbrushing recommendation device 500, for example, a hard disk or a memory module of the toothbrushing recommendation device 500. The memory 502 can also be an external storage device for the toothbrushing recommendation device 500, for example, a plug-in hard disk, a smart media card (SMC), a secure digital (SD) card, a flash card, or the like equipped for the toothbrushing recommendation device 500. Furthermore, the memory 502 can also include not only an internal storage unit of the toothbrushing recommendation device 500 but also an external storage device. The memory 502 is used to store the computer program 502 and other programs and data required by the toothbrushing recommendation device 500. The memory 502 can also be used to temporarily store data that has been output or will be output.

Those skilled in the art can clearly understand that for convenience and conciseness of the description, specific working processes of the above described systems, apparatuses, and units can refer to corresponding processes in the aforementioned method embodiments, and are not repeated here.

In the above embodiments, the description of each embodiment has its own emphasis. For parts that are not described in detail or recorded in a certain embodiment, reference may be made to related descriptions of other embodiments.

One of ordinary skill in the art can be aware that the modules, units and/or method steps of the examples described in combination with the embodiments disclosed herein can be implemented by electronic hardware or a combination of computer software and electronic hardware. Whether these functions are executed by hardware or software depends on the specific application and design constraint conditions of the technical solution. Professional technicians can use different methods for each specific application to implement the described functions, but such implementation should not be considered as going beyond the scope of the present disclosure.

In the embodiments provided by the present disclosure, it should be understood that the disclosed systems, devices and methods may be implemented in other ways. For example, the device embodiments described above are merely illustrative. For example, the division of the modules or units is only a logical function division. In actual implementation, there may be other division methods, for example, multiple units or components may be combined or may be integrated into another system, or some features can be ignored or not implemented. In addition, the displayed or discussed mutual coupling, or direct coupling, or communication connection, may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or may also be distributed on multiple network units. Some or all of the units may be selected according to actual requirements to achieve the objectives of the solutions of the embodiments.

In addition, the functional units in the various embodiments of the present disclosure may be integrated into one processing unit, or each unit may physically exist alone, or two or more units may be integrated into one unit. The above-mentioned integrated unit can be implemented in the form of hardware, and can also be implemented in the form of software functional units.

If the integrated units are implemented in the form of software functional units and sold or used as independent products, they can be stored in a computer readable storage medium. Based on such understanding, all or some of the processes of the methods in the above-mentioned embodiments implemented by the present disclosure can also be completed by instructing relevant hardware through a computer program. The computer program can be stored in a computer readable storage medium. When the computer program is executed by a processor, the steps of the foregoing method embodiments can be implemented. Wherein, the computer program includes computer program codes, and the computer program codes may be in the form of source codes, object codes, executable files, or some intermediate forms, etc. The computer readable medium may include: any entity or device capable of carrying the computer program codes, recording mediums, U-disks, mobile hard disks, magnetic disks, optical disks, computer memories, read-only memories (ROM, Read-Only Memory), random access memories (RAM, Random Access Memory), electrical carrier signals, telecommunications signals, software distribution media, and so on. It should be noted that the content contained in the computer readable medium can be appropriately added or deleted in accordance with the requirements of the legislation and patent practice in a jurisdiction. For example, in some jurisdictions, according to the legislation and patent practice, the computer readable medium does not include electrical carrier signals and telecommunication signals.

The above-mentioned embodiments are only intended to illustrate but not to limit the technical solutions of the present disclosure. Although the present disclosure has been described in detail with reference to the foregoing embodiments, those of ordinary skill in the art should understand that: the technical solutions recorded in the foregoing embodiments can still be modified, or some of the technical features thereof can be equivalently replaced; these modifications or replacements do not cause the essence of corresponding technical solutions to deviate from the spirit and scopes of the technical solutions of the embodiments of the present disclosure.

## Claims

1. An artificial-intelligence-based toothbrushing recommendation method, comprising:
acquiring toothbrushing data and brush head data detected by a data detection apparatus in a smart toothbrush;
analyzing the toothbrushing data, and obtaining a toothbrushing condition of each toothbrushing surface by statistics, wherein the toothbrushing condition comprises a toothbrushing duration, a toothbrushing strength, a toothbrushing amplitude and a horizontal brushing condition;
analyzing the brush head data to obtain a brush head condition of the smart toothbrush; and
forming a recommended first toothbrushing scheme according to the toothbrushing duration, the toothbrushing strength, the toothbrushing amplitude, the horizontal brushing condition, and the brush head condition.

2. The toothbrushing recommendation method according to claim 1, wherein, the data detection apparatus comprises a gesture sensor, a pressure sensor, an NFC label, and a label read-write apparatus;
correspondingly, the acquiring toothbrushing data and brush head data detected by a data detection apparatus in a smart toothbrush comprises:
acquiring first toothbrushing data output by the gesture sensor, second toothbrushing data output by the pressure sensor, and brush head data collected by the NFC label and read by the label read-write apparatus.

3. The toothbrushing recommendation method according to claim 1, wherein, the toothbrushing recommendation method of the smart toothbrush further comprises:
acquiring personal information of a user, and determining a person group in which the user is according to the personal information;
according to the person group in which the user is and a correspondence relationship between the person group and a preset toothbrushing scheme, recommending a matched original toothbrushing scheme;
receiving a first selection operation of the user for the original toothbrushing scheme, and determining whether the original toothbrushing scheme is accepted according to the first selection operation;
when the original toothbrushing scheme is accepted, pushing the original toothbrushing scheme to the smart toothbrush to perform adjustment of toothbrushing parameters; and
when the original toothbrushing scheme is not accepted, pushing a second toothbrushing scheme re-selected or self-defined by the user to the smart toothbrush to perform adjustment of toothbrushing parameters.

4. The toothbrushing recommendation method according to claim 1, wherein, the toothbrushing data comprises a three-axis acceleration output by a three-axis acceleration sensor and a three-axis angular velocity output by a three-axis gyroscope;
correspondingly, the analyzing the toothbrushing data comprises:
performing fusion processing for the three-axis acceleration and the three-axis angular velocity, and obtaining a rolling angle, a pitch angle, and a yawing angle of the smart toothbrush at each toothbrushing position;
according to the rolling angle, the pitch angle, and the yawing angle, determining a teeth division corresponding to each toothbrushing position in preset teeth divisions, wherein the preset teeth divisions refer to teeth regions divided in advance according to distribution conditions of all teeth; and
determining a toothbrushing surface corresponding to each toothbrushing position in the teeth divisions according to the rolling angle.

5. The toothbrushing recommendation method according to claim 4, wherein, the obtaining a toothbrushing duration of each toothbrushing surface by statistics comprises:
counting a total toothbrushing duration during which the smart toothbrush performs toothbrushing actions on each toothbrushing surface;
acquiring a mistaken toothbrushing duration during which the toothbrushing actions are performed on each toothbrushing surface and the pitch angle of the smart toothbrush is larger than a preset pitch angle; and
subtracting the mistaken toothbrushing duration from the total toothbrushing duration to obtain a toothbrushing duration of each toothbrushing surface.

6. The toothbrushing recommendation method according to claim 1, wherein, the forming a recommended first toothbrushing scheme according to the toothbrushing duration, the toothbrushing strength, the toothbrushing amplitude, the horizontal brushing condition, and the brush head condition specifically comprises:
determining a teeth condition of each toothbrushing surface according to the toothbrushing duration, the toothbrushing strength, the toothbrushing amplitude, the horizontal brushing condition; and
forming the recommended first toothbrushing scheme according to the teeth condition of each toothbrushing surface and the brush head condition.

7. The toothbrushing recommendation method according to any one of claims 1-6, after the forming a recommended first toothbrushing scheme according to the toothbrushing duration, the toothbrushing strength, the toothbrushing amplitude, the horizontal brushing condition, and the brush head condition, further comprising:
receiving a second selection operation of the user for the first toothbrushing scheme, and determining whether the first toothbrushing scheme is accepted according to the second selection operation; and
when the first toothbrushing scheme is accepted, pushing the first toothbrushing scheme to the smart toothbrush to perform adjustment of toothbrushing parameters.

8. An artificial-intelligence-based toothbrushing recommendation apparatus, comprising:
a data acquisition module configured to acquire toothbrushing data and brush head data detected by a data detection apparatus in a smart toothbrush;
a toothbrushing data analysis module configured to analyze the toothbrushing data, and obtain a toothbrushing condition of each toothbrushing surface by statistics, wherein the toothbrushing condition comprises a toothbrushing duration, a toothbrushing strength, a toothbrushing amplitude and a horizontal brushing condition;
a brush head data analysis module configured to analyze the brush head data to obtain a brush head condition of the smart toothbrush; and
a toothbrushing scheme recommendation module configured to form a recommended first toothbrushing scheme according to the toothbrushing duration, the toothbrushing strength, the toothbrushing amplitude, the horizontal brushing condition, and the brush head condition.

9. An artificial-intelligence-based toothbrushing recommendation device comprising a memory, a processor, and a computer program stored in the memory and being executable in the processor; wherein the processor, when executing the computer program, implements the operations of the artificial-intelligence-based toothbrushing recommendation method according to any one of claims 1-7.

10. A computer readable storage medium, wherein the computer readable storage medium stores a computer program, and the computer program, when being executed by a processor, implements the operations of the artificial-intelligence-based toothbrushing recommendation method according to according to any one of claims 1-7.
